# EUROPÄISCHE PATENTSCHRIFT

(11) **EP 3 498 925 B1**
(45) Veröffentlichungstag und Bekanntmachung des Hinweises auf die Patenterteilung: **05.08.2020**
(21) Anmeldenummer: 17207676.2
(22) Anmeldetag: 15.12.2017
(51) Int. Cl.: E03C 1/28, E03C 1/298, F16K 15/14

(54) **GERUCHVERSCHLUSSVORRICHTUNG, INSBESONDERE FÜR EINE SANITÄRVORRICHTUNG**
ODOUR CLOSURE DEVICE, IN PARTICULAR FOR A SANITARY DEVICE
DISPOSITIF ANTI-ODEUR, EN PARTICULIER POUR UN DISPOSITIF SANITAIRE

(43) Veröffentlichungstag der Anmeldung: 19.06.2019
(73) Patentinhaber: Viega Technology GmbH & Co. KG, 57439 Attendorn (DE)
(72) Erfinder: Hennes, Frank, 57413 Finnentrop (DE); Barutta, Monika, 58540 Meinerzhagen (DE); Skrodolies, Dr. Klaus, 57368 Lennestadt (DE); Sinderhauf, Tim, 58540 Meinerzhagen (DE)
(74) Vertreter: Cohausz & Florack

(56) Entgegenhaltungen:
- EP-A1- 2 840 191
- EP-A1- 3 006 632
- WO-A1-2017/120593
- CH-B1- 710 071
- KR-A- 20140 001 613

## Beschreibung

Die Erfindung betrifft eine Geruchsverschlussvorrichtung, insbesondere für eine Sanitärvorrichtung, mit einem ein Rohrstück aufweisenden Abflusselement wobei das Rohrstück eine Dichtwandung mit einer umlaufenden Dichtfläche definiert, mit einer einen umlaufenden Dichtabschnitt aufweisenden Dichtmembran aus gummielastischem Material, welche in einer Verschlussstellung mit ihrem Dichtabschnitt dichtend in Kontakt mit der Dichtfläche der Dichtwandung ist und durch anstehende Flüssigkeit, beispielsweise Urin, von der Dichtwandung in eine Öffnungsstellung gedrückt wird, und mit einer Halterung zur Lagerung der Dichtmembran relativ zu der Dichtwandung, wobei die umlaufende Dichtfläche der Dichtwandung und der umlaufende Dichtabschnitt der Dichtmembran im demontierten Zustand der Dichtmembran voneinander abweichende Querschnittsprofile aufweisen.

Geruchverschlussvorrichtungen sind für unterschiedliche Anwendungen bekannt und werden in der Regel in Ablaufgarnituren verwendet, um eine Beeinträchtigung der Umgebung durch aus dem Ablauf aufsteigenden, unangenehm riechenden Geruch zu vermeiden. Beispielsweise weist ein Waschbecken- oder Badewannenablauf üblicherweise eine Umlenkung auf, in welcher eine als Geruchverschluss wirkende Sperrwassermenge gefangen ist. Derartige Geruchverschlüsse sind auch bei Bodenabläufen wie zum Beispiel Balkon- und Terrassenabläufen bekannt. Ein Problem der nach dem Sperrwasserprinzip funktionierenden Geruchverschlüsse besteht darin, dass diese bei längerem Nichtgebrauch des zugeordneten Sanitärobjektes bzw. bei längerer Trockenheit austrocknen und somit ihre Sperrwirkung verlieren können.

Ferner sind auch Geruchverschlussvorrichtungen für spülwasserlose Sanitärgegenstände in verschiedenen Ausführungen bekannt. Unter spülwasserlos wird verstanden, dass kein Spülwasser für die Spülung des Sanitärgegenstandes, beispielsweise eines Urinals oder eines sanitären Ablaufbeckens verwendet wird. Die spülwasserlose Spülung erfolgt durch eine entsprechende Ausführung der Komponenten des Sanitärgegenstandes und der Geruchverschlussvorrichtung, wobei die abzuführende Flüssigkeit, insbesondere Urin, aufgrund der Schwerkraft aus dem Sanitärgegenstand abfließt.

Die CH 710 071 B1 offenbart einen Geruchverschluss insbesondere für ein Urinal, umfassend einen Einlass mit einer Öffnung zu einem Ablauf für Sanitärwasser, einen rohrförmigen Abfluss, welcher mit einem oberen Ende an den Einlass anschließt, wobei der rohrförmige Abfluss den Ablauf umschliesst, ein unteres Ende des Abflusses, für den Austritt des Sanitärwassers und einen Dichtkörper, welcher im Abfluss angeordnet und einlassseitig befestigt ist. Der Ablauf weist eine Mehrzahl von konzentrischen Ablauföffnungen auf, die beispielsweise langlochähnlich entlang eines oder mehrerer konzentroscher Kreise angeordnet sind. In einem Ausführungsbeispiel weist der Dichtkörper einen schuppenförmig ausgestalteten Kontaktbereich auf. Dabei sind Teile des Kontaktbereichs schuppenartig übereinandergelegt.

Die EP 2 840 191 A1 offenbart eine Geruchverschlussvorrichtung für Urinale, welche ein eine Dichtwandung aufweisendes Abflusselement, eine Dichtmembran und ein Lagerungselement zur Lagerung der Dichtmembran relativ zu der Dichtwandung umfasst. Die Dichtmembran ist in einer Verschlussstellung dichtend in Kontakt mit der Dichtwandung und wird bei Anstehen von Urin oder einer anderen Flüssigkeit von der Verschlussstellung in eine Öffnungsstellung von der Dichtwandung weg gedrückt, wodurch ein Spalt zwischen Dichtmembran und Dichtwandung gebildet wird, durch welchen die Flüssigkeit abfließt. Die Dichtmembran besitzt eine Dichtfläche, die parallel zur Dichtwandung verläuft, wobei die Dichtfläche an der Dichtwandung flächig anliegt. Die Dichtmembran weist in Abflussrichtung gesehen vor der Dichtfläche einen tonnenförmig verlaufenden Stauabschnitt auf, dessen Durchmesser sich mit zunehmendem Abstand von der Dichtfläche verkleinert. Das Lagerungselement weist dabei eine flächige Lagerplatte mit sich davon radial nach außen erstreckenden Lagerstegen auf, über welche die Lagerplatte in dem Abflusselement gelagert ist. Um bei einem Gegendruck im Abwassersystem ein Aufdrücken und damit ein Öffnen der Dichtmembran zu verhindern, ist der Stauabschnitt der Dichtmembran an den Lagerstegen abgestützt. Diese bekannte Geruchverschlussvorrichtung weist zahlreiche Toträume vor der Geruchsperre auf, wodurch die Gefahr einer Geruchsbildung besteht. Insbesondere bildet sich der Spalt zwischen Dichtmembran und Dichtwandung erst bei einer relativ großen anstehenden Urin- oder Flüssigkeitsmenge, wodurch die Gefahr einer Geruchsbildung besteht.

Die WO 2017/120593 A1 zeigt einen glockenförmigen Ventilkörper aus elastischem Material für ein wasserloses Urinal. Der Ventilkörper wird in eine rohrförmige Hülse eingesetzt, in welcher er formschlüssig gehalten wird. Die Außenseite des Ventilkörpers dichtet gegenüber einer inneren Wandung der Hülse ab. An der Innenseite des Ventilkörpers sind vertikal verlaufende, verteilt angeordnete Rippen ausgebildet, die sich in einen Dichtungsbereich des Ventilkörpers erstrecken und eine strukturelle Stützfunktion des Ventilkörpers bewirken. Die Außenseite des Ventilkörpers ist glatt ausgebildet.

Der vorliegenden Erfindung liegt die Aufgabe zugrunde, eine Vorrichtung der eingangs genannten Art zu schaffen, bei der die Gefahr der Geruchsbildung minimiert ist und bei der auch kleine anstehende Flüssigkeitsmengen, insbesondere Urinmengen, sicher abgeführt werden.

Gelöst wird diese Aufgabe durch eine Geruchverschlussvorrichtung mit den in Anspruch 1 angegebenen Merkmalen. Bevorzugte und vorteilhafte Ausgestaltungen der erfindungsgemäßen Geruchverschlussvorrichtung sind in den Unteransprüchen angegeben.

Zur Lösung der Aufgabe sieht die Erfindung bei einer Geruchsverschlussvorrichtung der eingangs genannten Art vor, dass die umlaufende Dichtfläche der Dichtwandung ein von einem kreisrunden Querschnittsprofil abweichendes Querschnittsprofil aufweist.

Durch die Erfindung wird sichergestellt, dass eine in Fließrichtung vor dem Dichtabschnitt der gummielastischen Dichtmembran anstehende Flüssigkeits- oder Urinmenge in kurzer Zeit zuverlässig abgeführt wird. Durch die voneinander abweichenden Querschnittprofile wird ein definiertes Einknicken oder Nachgeben des Dichtabschnitts der Dichtmembran begünstigt, so dass der Dichtabschnitt der Dichtmembran auch schon durch eine relativ geringe anstehende Flüssigkeitsmenge bereichsweise von der Dichtfläche der Dichtwandung weg in eine Öffnungsstellung gedrückt wird.

Bei herkömmlichen gattungsgemäßen Geruchverschlussvorrichtungen sind die Dichtwandung und der der Dichtwandung zugeordnete Dichtabschnitt der Dichtmembran jeweils kreiszylindrisch ausgebildet. Aufgrund ihres kreisrunden Querschnittsprofils weist die Dichtmembran eine relativ hohe Formstabilität auf. Die zur elastischen Verformung der Dichtmembran und somit die zur Bildung eines Ablaufspaltes zwischen Dichtmembran und Dichtwandung erforderliche Druckkraft ist dementsprechend hoch. Im Vergleich dazu wird bei der erfindungsgemäßen Geruchverschlussvorrichtung aufgrund der im demontierten Zustand voneinander abweichenden Querschnittsprofile von Dichtwandung und Dichtmembran im montierten Zustand eine geringere Druckkraft benötigt, um den Dichtabschnitt der Dichtmembran aus der Verschlussstellung von der Dichtwandung weg zu drücken.

In der Verschlussstellung korrespondiert das Querschnittsprofil des Dichtabschnitts der Dichtmembran im Wesentlichen mit dem Querschnittsprofil der Dichtfläche der Dichtwandung, indem der Dichtabschnitt der Dichtmembran dichtend an der Dichtfläche der Dichtwandung anliegt und somit keine Gerüche aus einer der Geruchverschlussvorrichtung nachfolgenden Abflussrohrleitung in die Umgebung der Geruchverschlussvorrichtung entweichen können.

Die erfindungsgemäße Geruchverschlussvorrichtung ist insbesondere für Urinale, vorzugsweise für spülwasserlose Urinale geeignet bzw. bestimmt. Sie kann aber auch bei Duschen oder Badewannen und auch bei Bodenabläufen wie z.B. Balkon- und Terrassenabläufen verwendet werden.

Eine bevorzugte Ausgestaltung der Erfindung ist dadurch gekennzeichnet, dass der umlaufende Dichtabschnitt der Dichtmembran im demontierten Zustand der Dichtmembran ein kreisrundes oder im Wesentlichen kreisrundes Querschnittsprofil aufweist. Dies ist hinsichtlich der Fertigung, der Montage sowie der Funktion der erfindungsgemäßen Geruchverschlussvorrichtung von Vorteil.

Eine weitere vorteilhafte Ausgestaltung der Erfindung ist dadurch gekennzeichnet, dass die umlaufende Dichtfläche der Dichtwandung ein ovales oder ellipsenförmiges Querschnittsprofil aufweist. Eine Dichtwandung, deren Dichtfläche ein solches Querschnittsprofil aufweist, lässt sich fertigungstechnisch relativ einfach und kostengünstig realisieren. Insbesondere ist ein ovales oder ellipsenförmiges Querschnittsprofil der Dichtwandung vorteilhaft für die Abdichtwirkung der Geruchverschlussvorrichtung, da der Dichtabschnitt der gummielastischen Dichtmembran, dessen Querschnittsprofil im demontierten Zustand der Dichtmembran bevorzugt kreisrund oder im Wesentlichen kreisrund ausgebildet ist, in diesem Fall in besonders zuverlässiger Weise dichtend an der Dichtfläche der Dichtwandung anliegen kann.

Eine andere vorteilhafte Ausgestaltung der Erfindung sieht vor, dass die umlaufende Dichtfläche der Dichtwandung ein Querschnittsprofil aufweist, welches aus mindestens einem bogenförmigen, vorzugsweise kreisbogenförmigen Abschnitt und mindestens einem geraden oder nach innen gewölbten Abschnitt zusammengesetzt ist. Der mindestens eine gerade oder nach innen gewölbte Abschnitt des Querschnittsprofils erstreckt sich dabei jeweils vorzugsweise über einen Winkel von maximal 45°, bevorzugt maximal 30°, besonders bevorzugt maximal 20°. Die Untergrenze des Winkels, über den sich der mindestens eine gerade oder nach innen gewölbte Abschnitt des Querschnittsprofils erstreckt, beträgt dabei beispielsweise jeweils 5°. Umfasst das Querschnittsprofil der umlaufenden Dichtfläche der Dichtwandung mehrere solcher geraden und/oder nach innen gewölbten Abschnitte, so sind diese Abschnitte vorzugsweise über den Innenumfang der Dichtwandung gleichmäßig verteilt angeordnet oder ausgebildet. Vorzugsweise umfasst das Querschnittsprofil der umlaufenden Dichtfläche der Dichtwandung mindestens drei solcher geraden und/oder nach innen gewölbten Abschnitte. Eine derartige Ausgestaltung der erfindungsgemäßen Geruchverschlussvorrichtung ermöglicht in besonders zuverlässiger Weise das Abfließen von geringen Flüssigkeitsmengen in kurzer Zeit, da der im demontierten Zustand ein anderes Querschnittsprofil, bevorzugt ein kreisrundes Querschnittsprofil aufweisende Dichtabschnitt der Dichtmembran bereits bei geringer Krafteinwirkung durch die anstehende Flüssigkeit in eine Öffnungsstellung gedrückt wird, so dass zwischen Dichtwandung und Dichtmembran ein Spalt entsteht, durch den die Flüssigkeit abfließen kann.

Nach einer weiteren bevorzugten Ausgestaltung der Erfindung weist das Rohrstück innenseitig Einlaufkanäle auf, wobei sich die Einlaufkanäle im Wesentlichen vertikal in Richtung der Dichtwandung erstrecken und oberhalb der Dichtfläche der Dichtwandung enden. Die Einlaufkanäle sind vorzugsweise in die Innenseite des Rohrstückes radial eingeformt.

Eine weitere vorteilhafte Ausgestaltung der Erfindung ist dadurch gekennzeichnet, dass die Dichtmembran einen gummielastischen, sich nach oben verjüngenden Stauabschnitt und einen sich daran in Abflussrichtung gesehen anschließenden, gummielastischen, im Wesentlichen hohlzylindrischen Abschnitt aufweist, wobei die Außenseite des Stauabschnitts mit dem Rohrstück einen ringförmigen, ununterbrochenen Einlaufkanal begrenzt, der sich in Abflussrichtung gesehen gegen Null verjüngt. Dabei ist der Dichtabschnitt der Dichtmembran vorzugsweise durch einen Teil des im Wesentlichen hohlzylindrischen Abschnitts definiert. Hierdurch lassen sich kleine anstehende Urin- oder Flüssigkeitsmengen sehr sicher und zuverlässig abführen. Vorzugsweise ist der Einlaufkanal hierzu im Querschnitt betrachtet im Wesentlichen zwickelförmig ausgebildet, indem der Stauabschnitt eine kugelabschnittförmige oder gewölbte Außenfläche aufweist und dadurch im Querschnitt betrachtet eine bogenförmige Außerkontur definiert, während das Rohrstück eine zylindrische Innenfläche aufweist und dadurch im Querschnitt betrachtet eine Gerade definiert, welche die bogenförmige Außerkontur berührt.

Nach einer weiteren Ausgestaltung der erfindungsgemäßen Geruchverschlussvorrichtung sind die Dichtmembran und die Höhe der Halterung so bemessen, dass sich im montierten Zustand der Geruchverschlussvorrichtung ein im Wesentlichen hohlzylindrischer Abschnitt der Dichtmembran vom unteren Rand der Dichtmembran bis in einen am Abflusselement ausgebildeten Einlauftrichter hinein erstreckt.

Eine weitere vorteilhafte Ausgestaltung der Erfindung sieht vor, dass der im Wesentlichen hohlzylindrische Abschnitt der Dichtmembran mit einem abgerundeten Übergang des Einlauftrichters in Richtung des Rohrstückes einen ringförmigen Einlaufkanal begrenzt, der sich in Abflussrichtung gesehen gegen Null verjüngt. Der ringförmige Einlaufkanal ist dabei vorzugsweise durch die oben genannten, sich im Wesentlichen vertikal erstreckenden Einlaufkanäle radial sowie axial erweitert.

Nach einer weiteren vorteilhaften Ausgestaltung der Erfindung ist die Dichtmembran auf der Halterung fixiert, wobei die Halterung unterhalb der Dichtmembran abgestützt ist. Hierdurch lassen sich die Anzahl bzw. die Größe von Toträumen vor der Geruchsperre verringern und damit die Gefahr der Geruchsbildung minimieren. Insbesondere ermöglich diese Ausgestaltung eine Anordnung der Dichtmembran relativ zu der Halterung und der Dichtwandung dergestalt, dass auch kleine anstehende Flüssigkeitsmengen, beispielsweise Urinmengen, sicher abgeführt werden. Vorzugsweise ist die Halterung unterhalb der Dichtmembran in Kontakt mit dem Rohrstück, also an dem Rohrstück abgestützt.

Im Unterschied zu der aus der EP 2 840 191 A1 bekannten Geruchverschlussvorrichtung erfordert die erfindungsgemäße Vorrichtung in der voranstehend genannten Ausgestaltung nicht, dass der Stauabschnitt der Dichtmembran an Lagerstegen abgestützt ist, um bei einem Gegendruck im Abwassersystem ein Aufdrücken und damit ein Öffnen der Dichtmembran zu verhindern. Vielmehr lässt sich durch die vorgeschlagene Ausgestaltung der Kontaktbereich der Dichtmembran an deren Halterung minimieren, wodurch sich die Anzahl bzw. Größe von Toträumen vor der Geruchsperre erheblich minimieren lässt. Insbesondere lässt sich durch die vorgeschlagene Ausgestaltung der erfindungsgemäßen Geruchverschlussvorrichtung der Einlaufbereich am Stauabschnitt der Dichtmembran so gestalten, dass auch kleine anstehende Flüssigkeitsmengen sicher abgeführt werden.

Eine weitere vorteilhafte Ausgestaltung der Erfindung sieht vor, dass die Dichtmembran an einem Vorsprung der Halterung fixiert ist, wobei der Vorsprung an der Oberseite der Halterung angeordnet ist und eine Ringnut oder Hinterschneidung aufweist, an welcher die Dichtmembran dichtend angeknöpft ist. Die Dichtmembran lässt sich hierdurch auf einfache und zuverlässige Weise mit der Halterung dichtend verbinden und zu Wartungszwecken gegebenenfalls auch lösen.

Der Vorsprung der Halterung, an welchem die Dichtmembran fixiert ist, ist vorzugsweise platten- oder knopfförmig ausgebildet, wobei der Vorsprung eine Ringnut definiert, in welche die Dichtmembran dichtend eingreift.

Nach einer weiteren Ausgestaltung der Erfindung weist die Halterung einen gewölbten, einen kugelsegmentförmigen oder einen im Wesentlichen planen Abschnitt auf, auf dem die Dichtmembran aufliegt. Diese Ausgestaltung verbessert die Formstabilität der Dichtmembran in deren Verschlussstellung.

Für eine hohe Ablaufleistung, d.h. einen hohen Abflussvolumenstrom, ist es vorteilhaft, wenn die Halterung gemäß einer weiteren Ausgestaltung Stützbeine aufweist, die beanstandet zu der Innenfläche der Dichtmembran angeordnet sind und gegenüber einem unteren Rand der Dichtmembran nach unten vorstehen. Vorzugsweise weist die Halterung mindestens drei solcher Stützbeine auf, die vorzugsweise gleichmäßig voneinander beabstandet sind. Für die Stabilität der Halterung ist es von Vorteil, wenn die Stützbeine durch Querstreben miteinander verbunden sind. Vorzugsweise sind die Querstreben im fertig montierten Zustand der Geruchverschlussvorrichtung unterhalb des unteren Randes der Dichtmembran angeordnet.

Hinsichtlich einer materialsparenden Ausführung der Halterung bei zugleich guter Formstabilität ist es günstig, wenn die Stützbeine gemäß einer weiteren Ausgestaltung einen nach außen abgewinkelten oder schräg nach außen verlaufenden Beinabschnitt aufweisen.

Eine weitere Ausgestaltung der erfindungsgemäßen Geruchverschlussvorrichtung ist dadurch gekennzeichnet, dass das Rohrstück Ausnehmungen aufweist, in welche die Halterung eingreift. Hierdurch lassen sich die Halterung und damit die Dichtmembran optimal und zuverlässig in Bezug auf die vom Rohrstück definierte Dichtwandung positionieren. Vorzugsweise stehen die Stützbeine hierzu gegenüber den Querstreben nach außen vor und definieren Vorsprünge, welche in die Ausnehmungen des Rohrstücks eingreifen. Die Ausnehmungen sind vorzugsweise als nach unten offene Ausnehmungen am unteren Rand des Rohrstücks ausgebildet.

Nach einer weiteren vorteilhaften Ausgestaltung der erfindungsgemäßen Geruchverschlussvorrichtung ist oberhalb des Abflusselements eine hauben- oder kappenförmige Abdeckung angeordnet, die über Abstandhalter lösbar mit dem Abflusselement (unmittelbar oder mittelbar) verbunden ist. Durch die Abdeckung lassen sich das optische Aussehen und der hygienische Eindruck, den die Geruchverschlussvorrichtung vermittelt, positiv beeinflussen. Insbesondere kann die Geruchverschlussvorrichtung durch die Abdeckung beispielsweise an verschiedene Sanitärkeramikfarben auf einfache Weise farblich angepasst werden. Die Abdeckung kann allerdings auch in einer Kontrastfarbe ausgeführt werden oder eine metallische, beispielsweise verchromte Oberfläche aufweisen. Dabei ist die Abdeckung bevorzugt dergestalt ausgeführt, dass sie entlang ihres gesamten Außenumfangs das Abflusselement seitlich überragt. Die Abdeckung kann mit einem flanschförmigen Teil der Geruchverschlussvorrichtung, beispielsweise einem in eine Profildichtung einsetzbaren oder einschraubbaren Adapter, einen Ringspalt als Ablaufspalt für Urin oder eine andere Flüssigkeit definieren.

Eine weitere Ausgestaltung der erfindungsgemäßen Geruchverschlussvorrichtung ist dadurch gekennzeichnet, dass das Rohrstück in eine Rohrstückverlängerung eingesteckt ist, wobei die Rohrstückverlängerung lösbar mit dem Rohrstück und/oder dem Abflusselement verbunden ist. Durch die Rohrstückverlängerung kann ein Strömungswiderstand bereitgestellt werden, durch den eine Stauzone für die Flüssigkeit geschaffen wird. Wenn die Flüssigkeitssäule in dieser Stauzone genügend hoch ist, steigt der Flüssigkeitsdruck soweit an, dass die Flüssigkeit aus dieser Zone abfließen wird. Aufgrund der Schwerkraft der abfließenden Flüssigkeit entsteht ein Sogeffekt, der oberhalb der Dichtfläche des Geruchverschlusses anstehende Flüssigkeit schneller nach unten in die Rohrstückverlängerung zieht.

Die Rohrstückverlängerung kann hierzu an ihrem unteren Ende vorzugsweise ein Prall- oder Umlenkelement aufweisen, das als Strömungswiderstand wirkt. Das Prall- oder Umlenkelement ist beispielsweise gewölbt oder kegelförmig ausgebildet, wobei die Spitze des gewölbten Elements bzw. Kegels nach oben weist. Das Prall- oder Umlenkelement kann über mehrere sich im Wesentlichen vertikal erstreckende Haltestege mit einem hohlzylindrischen Abschnitt der Rohrstückverlängerung verbunden sein.

Eine weitere vorteilhafte Ausgestaltung der Rohrstückverlängerung ist dadurch gekennzeichnet, dass das Prall- oder Umlenkelement aus einer laschenförmigen Verlängerung der Rohrstückverlängerung gebildet ist, wobei diese Verlängerung gegenüber dem unteren Ende des rohrförmigen Abschnitts der Rohrstückverlängerung nach unten vorsteht und schräg in Richtung der Rohrmittelachse abgewinkelt ist. Das Prall- oder Umlenkelement ist dabei vorzugsweise im Wesentlichen scheibenförmig ausgebildet. Diese Ausgestaltung ist hinsichtlich einer einfachen, kostengünstigen Fertigung der Rohrstückverlängerung und des Prall- oder Umlenkelements von Vorteil.

Vorzugsweise ist die Rohrstückverlängerung im Wesentlichen gerade ausgebildet. Sie erfordert in diesem Fall in radialer Hinsicht nur wenig Bauraum (Platz) für ihre Anordnung beispielsweise in einem Sanitärgegenstand, insbesondere einem Urinal.

Eine weitere Ausgestaltung der Rohrstückverlängerung sieht vor, dass diese innenseitig einen Absatz aufweist, auf dem die Halterung abgestützt ist. Diese Ausgestaltung schafft eine einfache Möglichkeit zur axialen Festlegung der Halterung. Der Absatz kann auch zur axialen Festlegung des Rohrstücks des Abflusselements dienen. Der Absatz ist vorzugsweise als umlaufender Absatz ausgebildet.

Zur schnellen, werkzeuglosen Verbindung von Abflusselement und Rohrstückverlängerung weisen diese nach einer weiteren bevorzugten Ausgestaltung einander zugeordnete Rastelemente auf. Für eine zuverlässige und spielarme, bevorzugt spielfreie Verbindung von Abflusselement und Rohrstückverlängerung sind die Rastelemente vorzugsweise durch eine Drehbewegung des Abflusselements relativ zu der Rohrstückverlängerung miteinander verrastbar.

Nachfolgend wird die Erfindung anhand einer mehrere Ausführungsbeispiele darstellenden Zeichnung näher erläutert. Es zeigen:
- Fig. 1: einen schematisch dargestellten Sanitärgegenstand mit einer Geruchsverschlussvorrichtung und optionalem Zubehör, insbesondere einer Abdeckung, in einer perspektivischen Explosionsdarstellung;
- Fig. 2: den Sanitärgegenstand mit montierter Geruchverschlussvorrichtung aus Fig. 1 in einer Vertikalschnittansicht;

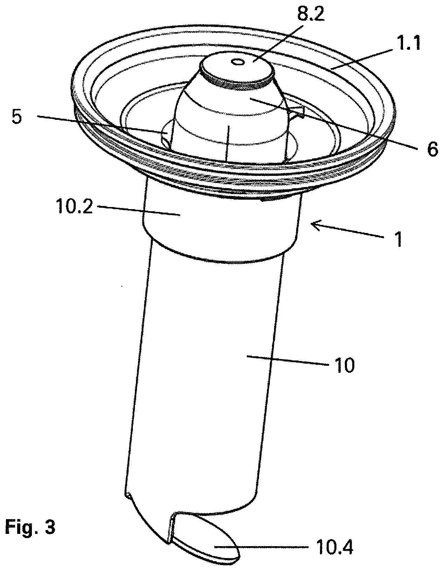

- Fig. 3: die Geruchverschlussvorrichtung aus den Figuren 1 und 2, ohne Abdeckung, in einer perspektivischen Darstellung;
- Fig. 4: die Geruchverschlussvorrichtung aus den Figuren 1 und 2, ohne Abdeckung, in einer perspektivischen Explosionsdarstellung;
- Fig. 5: ein Abflusselement der Geruchverschlussvorrichtung aus den Figuren 1 und 2, ohne Dichtmembran und ohne Halterung, in einer Draufsicht;

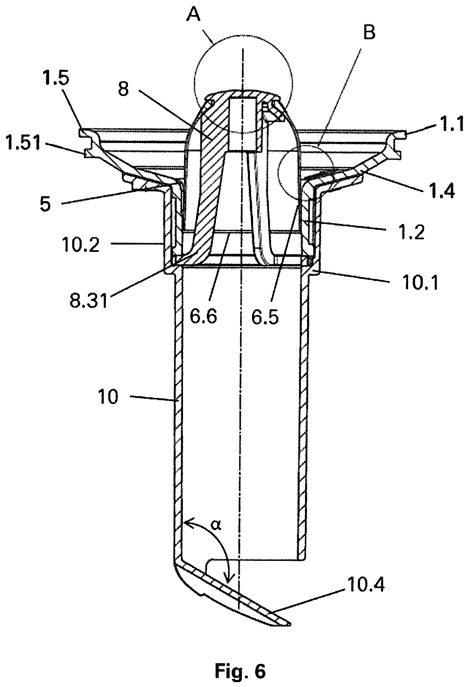

- Fig. 6: die Geruchverschlussvorrichtung aus den Figuren 1 und 2, ohne Abdeckung, in einer Vertikalschnittansicht;
- Fig. 7: eine vergrößerte Darstellung des Details A aus Fig. 6;
- Fig. 8: eine vergrößerte Darstellung des Details B aus Fig. 6; und
- Fig. 9: die auf der Halterung fixierte Dichtmembran der Geruchverschlussvorrichtung aus den Figuren 1 und 2 in einer perspektivischen Darstellung.

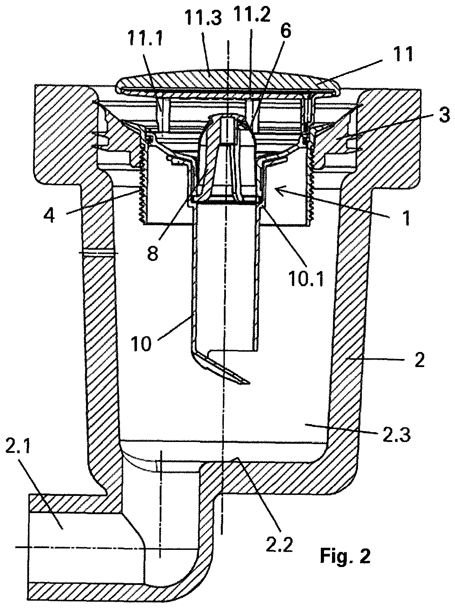

In der Zeichnung ist eine Geruchverschlussvorrichtung 1 gezeigt, die für einen Sanitärgegenstand 2 bestimmt ist, bei dem es sich beispielsweise um ein Urinal oder ein anderes sanitäres Ablaufbecken handeln kann. In Fig. 2 ist die Geruchverschlussvorrichtung 1 in dem Sanitärgegenstand 2 eingebaut. Über die Geruchverschlussvorrichtung 1 wird Flüssigkeit, wie zum Beispiel Urin, aus dem Sanitärgegenstand 2 zu einer Abflussrohrleitung 2.1 geleitet. Die Geruchverschlussvorrichtung 1 verhindert ein Aufsteigen von Gerüchen aus der Abflussrohrleitung 2.1 zur Außenseite bzw. in die Umgebung des Sanitärgegenstands 2 hin.

Die Geruchverschlussvorrichtung 1 ist vorzugsweise für den Einsatz in spülwasserlos betriebenen Ablaufvorrichtungen und Sanitärgegenständen bestimmt, insbesondere in spülwasserlos betriebenen Urinalen. Sie kann jedoch auch mit Spülwasser betrieben werden oder in anderen Vorrichtungen zur Vermeidung von unangenehmen Gerüchen verwendet werden.

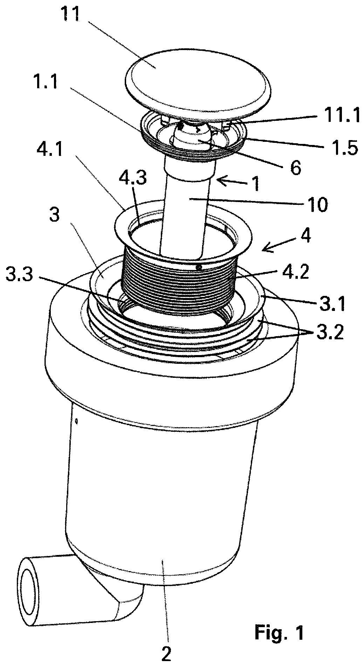

In dem in den Figuren 1 und 2 gezeigten Ausführungsbeispiel wird bzw. ist die Geruchverschlussvorrichtung 1 unter Verwendung einer ringförmigen Profildichtung 3 und eines einen umlaufenden Dichtflansch 4.1 aufweisenden Adapters 4 in den Sanitärgegenstand 2 eingebaut. Die Profildichtung 3 ist vorzugsweise aus gummielastischem Material gefertigt und weist an ihrem Außenumfang radial vorstehende Dichtlippen 3.1, 3.2 auf. Der Adapter 4 ist ring- oder buchsenförmig ausgebildet und wird in die Profildichtung 3 eingeführt. Er ist aus relativ hartem Material, beispielsweise aus rostfreiem Metall oder Hartkunststoff gefertigt und weist ein Außengewinde 4.2 auf, das in ein am Innenumfang der Profildichtung 3 ausgebildetes Innengewinde 3.3 einschraubbar ist.

Die Geruchverschlussvorrichtung 1 umfasst ein Abflusselement 1.1 mit einem Rohrstück 1.2, welches eine Dichtwandung 1.3 definiert. Das Rohrstück 1.2 ist im Wesentlichen hohlzylindrisch ausgebildet. An das Rohrstück 1.2 ist ein Einlauftrichter 1.4 angeformt, der an seinem oberen Ende einen umlaufenden Befestigungsflansch 1.5 aufweist. Die Oberseite des Befestigungsflansches 1.5 ist konisch ausgebildet und fällt ausgehend vom Außenumfang in Richtung der Mittelachse des Rohrstücks 1.2 hin ab. An der Unterseite des Befestigungsflansches 1.5 ist ein axialer Vorsprung 1.51 ausgebildet, der gegenüber dem Außenumfang des Befestigungsflansches 1.5 radial nach innen versetzt ist. Der axiale Vorsprung 1.51 ist vorzugsweise ringförmig ausgebildet und weist an seiner Außenseite eine umlaufende Ringnut auf, in die ein (nicht dargestellter) Dichtring (z.B. ein O-Ring) eingesetzt werden kann.

Der ring- oder buchsenförmige Adapter 4 hat an seiner Innenseite einen umlaufenden Absatz 4.3, auf dem das Abflusselement 1.1 mit seinem Befestigungsflansch 1.5 aufliegt, so dass das Abflusselement 1.1 in dem Adapter 4 formschlüssig gehalten, insbesondere axial abgestützt ist.

Des Weiteren umfasst die Geruchverschlussvorrichtung 1 eine Dichtmembran 6, welche mit der Dichtwandung 1.3 des Abflusselements 1.1 in einer Verschlussstellung dichtend in Kontakt ist und durch anstehende Flüssigkeit, wie Urin, von der Dichtwandung 1.3 in eine Öffnungsstellung weg gedrückt wird. Zur Lagerung der Dichtmembran 6 relativ zu der Dichtwandung 1.3 ist eine Halterung 8 vorgesehen. Die Halterung 8 kann auch als Dichtungsfassung bezeichnet werden. Die Dichtmembran 6 ist auf der Halterung 8 fixiert, wobei die Halterung 8 unterhalb der Dichtmembran abgestützt und dabei vorzugsweise mit dem Rohrstück 1.2 in Kontakt ist.

Die Dichtmembran 6 hat einen gummielastischen, sich nach oben verjüngenden Stauabschnitt 6.1 und einen sich daran in Abflussrichtung gesehen anschließenden, gummielastischen, im Wesentlichen hohlzylindrischen Abschnitt 6.2. Die Halterung 8 weist einen gewölbten Abschnitt 8.1 auf, auf dem die Dichtmembran 6 aufliegt.

Der Stauabschnitt 6.1 der Dichtmembran 6 ist in dem dargestellten Ausführungsbeispiel im Wesentlichen als sich nach oben hin verjüngend ausgebildet. Der Stauabschnitt 6.1 kann jedoch auch eine andere gewölbte Form aufweisen, beispielsweise im Wesentlichen die Form eines rotationssymmetrischen Paraboloids, oder im Wesentlichen glockenförmig ausgebildet sein. Zur Fixierung der Dichtmembran 6 auf der Halterung 8 weist die Dichtmembran 6 oberseitig eine Öffnung 6.3 auf, die an einem platten- oder knopfförmigen Vorsprung 8.2 der Halterung 8 angeknöpft wird bzw. ist. An dem platten- oder knopfförmigen Vorsprung 8.2 ist eine Ringnut 8.21ausgebildet, in welche die Dichtmembran 6 dichtend eingreift.

Die Dichtmembran 6 und die Höhe der Halterung 8 sind so bemessen, dass sich der im Wesentlichen hohlzylindrische Abschnitt 6.2 der Dichtmembran vom unteren Rand 6.6 der Dichtmembran 6 bis in den Einlauftrichter 1.4 hinein erstreckt. Der hohlzylindrische Abschnitt 6.2 definiert einen umlaufenden Dichtabschnitt 6.7 der Dichtmembran 6.

Die Halterung 8 weist im Wesentlichen vertikal verlaufende Stützstege oder Stützbeine 8.3 auf, die beanstandet zu der Innenfläche 6.5 der Dichtmembran 6 angeordnet sind und gegenüber dem unteren Rand 6.6 der Dichtmembran 6 nach unten vorstehen. In dem gezeigten Ausführungsbeispiel hat die Halterung 8 drei Stützstege oder Stützbeine 8.3. Alternativ kann die Halterung 8 auch eine andere Anzahl solcher Stützbeine 8.3 aufweisen. Vorzugsweise umfasst sie jedoch mindestens drei Stützbeine. Die Stützbeine 8.3 sind vorzugsweise gleichmäßig voneinander beabstandet.

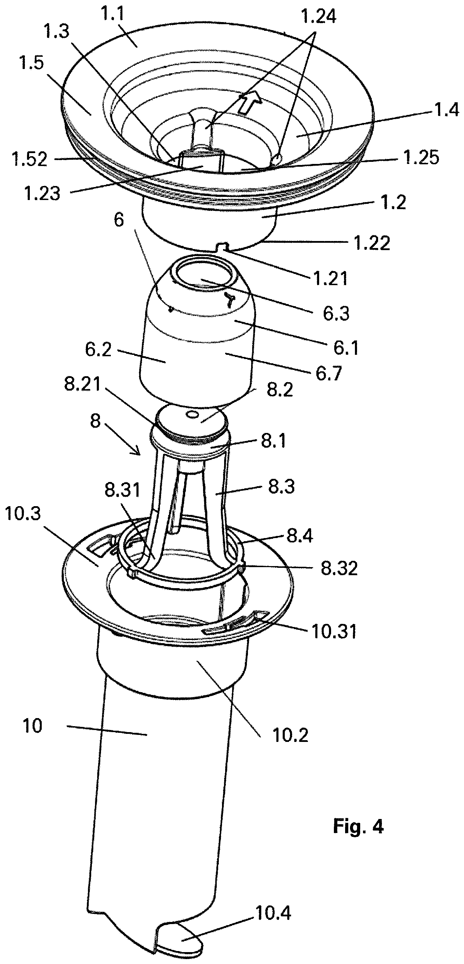

Die Stützbeine 8.3 sind durch Querstreben 8.4 miteinander verbunden. Die Querstreben 8.4 sind im fertig montierten Zustand der Geruchverschlussvorrichtung 1 unterhalb des unteren Randes 6.6 der Dichtmembran 6 angeordnet. Sie sind vorzugsweise kreisbogenförmig ausgebildet und bilden zusammen mit den Stützbeinen 8.3 einen geschlossenen Kreisring (siehe Fig. 4). Die Stützbeine 8.3 weisen jeweils einen nach außen abgewinkelten oder schräg nach außen verlaufenden Beinabschnitt 8.31 auf. Die unteren Enden der Stützbeine 8.3 bzw. Beinabschnitte 8.31 stehen gegenüber den Querstreben 8.4 radial vor.

Das Rohrstück 1.2 des Abflusselements 1.1 weist Ausnehmungen 1.21 auf, in welche die Halterung 8 formschlüssig eingreift. Die Ausnehmungen 1.21 münden an der Unterkante 1.22 des Rohrstücks 1.2. Die Halterung 8 greift im montierten Zustand mit ihren unteren, radial vorstehenden Enden (Vorsprüngen) 8.32 in die Ausnehmungen 1.21 ein.

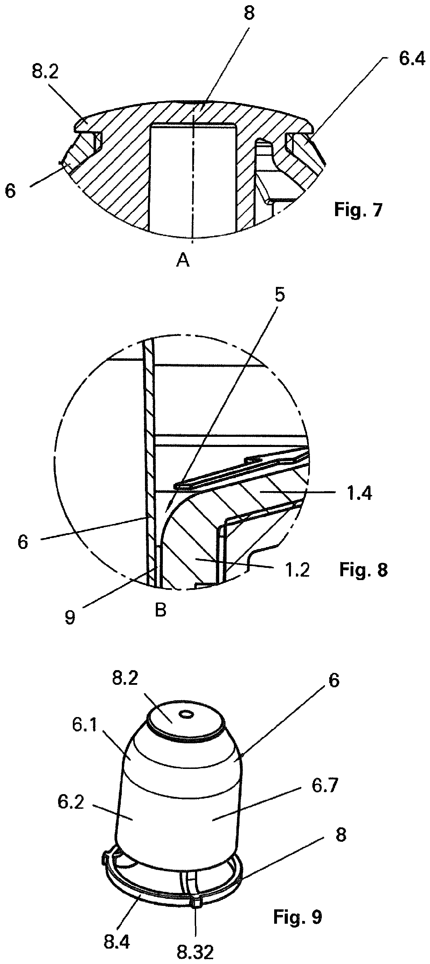

Die Außenseite des Stauabschnitts 6.1 der Dichtmembran 6 begrenzt mit dem Rohrstück 1.2 einen ringförmigen, ununterbrochenen Einlaufkanal 9, der sich in Abflussrichtung gesehen gegen Null verjüngt (vgl. insbesondere Fig. 8). Dadurch werden auch kleine anstehende Urin- oder Flüssigkeitsmengen sicher abgeführt. Der Einlaufkanal 9 ist im Querschnitt betrachtet im Wesentlichen zwickelförmig ausgebildet, da der Stauabschnitt 6.1 eine gewölbte Außenfläche aufweist und dadurch im Querschnitt betrachtet eine bogenförmige Außerkontur definiert, während das Rohrstück 1.2 eine zylindrische Innenfläche aufweist und dadurch im Querschnitt betrachtet eine Gerade definiert, welche die bogenförmige Außerkontur des Stauabschnitts 6.1 der Dichtmembran berührt.

Das Rohrstück 1.2 ist in eine Rohrstückverlängerung 10 eingesteckt, die lösbar mit dem Abflusselement 1.1 verbunden ist. Die Rohrstückverlängerung 10 kann auch als rohrförmiger Führungskörper bezeichnet werden. Die Rohrstückverlängerung 10 verläuft vertikal, endet mit Abstand oberhalb des Bodens 2.2 eines Abflussinnenraums 2.3 des Sanitärgegenstandes 2 oder eines Ablaufgehäuses und ist vorzugsweise im Wesentlichen gerade ausgebildet (Fig. 2). Sie besitzt innenseitig einen Absatz 10.1, auf dem die Halterung 8 zur Lagerung der Dichtmembran 6 abgestützt ist. Der obere Abschnitt 10.2 der Rohrstückverlängerung 10 ist nach Art einer Muffe ausgebildet, um das Rohrstück 1.2 aufzunehmen. Das obere Ende der Rohrstückverlängerung 10 weist einen umlaufenden Flansch 10.3 auf, der im montierten Zustand der Rohrstückverlängerung 10 an der Unterseite des Einlauftrichters 1.4 anliegt.

Die Rohrstückverlängerung 10 und das Abflusselement 1.1 sind mit einander zugeordneten Rastelementen versehen. Die Rastelemente sind derart ausgebildet, dass sie durch eine Drehbewegung des Abflusselements 1.1 relativ zu der Rohrstückverlängerung 10 miteinander verrastbar sind. Die Rastelemente bestehen beispielsweise aus in dem Flansch 10.3 der Rohrstückverlängerung 10 ausgebildeten, bogenförmigen Öffnungen 10.31 mit federelastischen Rastlaschen und darin einführbaren bzw. damit verbindbaren Rastvorsprüngen, die von der Unterseite des Einlauftrichters 1.4 nach unten vorstehen.

Durch die Rohrstückverlängerung 10 wird ein Strömungswiderstand bereitgestellt, durch den eine Stauzone für die abfließende Flüssigkeit, beispielsweise Urin, geschaffen wird. Hierzu ist die Rohrstückverlängerung 10 an ihrem unteren Ende mit einem Prall- oder Umlenkelement 10.4 versehen, das als Strömungswiderstand für die abfließende Flüssigkeit wirkt. Wenn die Flüssigkeitssäule in dieser Stauzone genügend hoch ist, steigt der Flüssigkeitsdruck soweit an, dass die Flüssigkeit aus dieser Zone abfließt. Aufgrund der Schwerkraft der abfließenden Flüssigkeit entsteht eine Sogwirkung, die oberhalb der Dichtfläche des Geruchverschlusses anstehende Flüssigkeit schneller nach unten in die Rohrstückverlängerung 10 zieht.

Das Prall- oder Umlenkelement 10.4 besteht beispielsweise aus einer laschenförmigen Verlängerung der Rohrstückverlängerung 10, die gegenüber dem unteren Ende des rohrförmigen Abschnitts der Rohrstückverlängerung 10 nach unten vorsteht und schräg in Richtung der Rohrmittelachse abgewinkelt ist. Das Prall- oder Umlenkelement 10.4 ist dabei im Wesentlichen scheibenförmig ausgebildet. Der Winkel a, den das scheibenförmige Prall- oder Umlenkelement 10.4 mit der Rohrwandung sowie der Rohrmittelachse der Rohrstückverlängerung 10 einschließt, liegt beispielsweise im Bereich von 100° bis 130°, vorzugsweise im Bereich von 110° bis 125°.

Oberhalb des Abflusselements 1.1 ist eine haubenförmige Platte 11 als Abdeckung angeordnet, die über federelastische Abstandhalter 11.1 lösbar mit dem Abflusselement 1.1 bzw. dem ring- oder buchsenförmigen Adapter 4 verbunden ist. Die Abdeckung 11 ist im Wesentlichen kreisscheibenförmig ausgebildet und steht entlang ihres gesamten Außenumfangs über das Abflusselement 1.1 seitlich vor. Die federelastischen Abstandhalter 11.1 sind an einer Trägerplatte 11.2 angeformt, die oberseitig mit einem kappenartigen Abdeckelement 11.3 versehen ist. Die Abdeckung 11 bzw. das Abdeckelement 11.3 kann eine Designfunktion übernehmen.

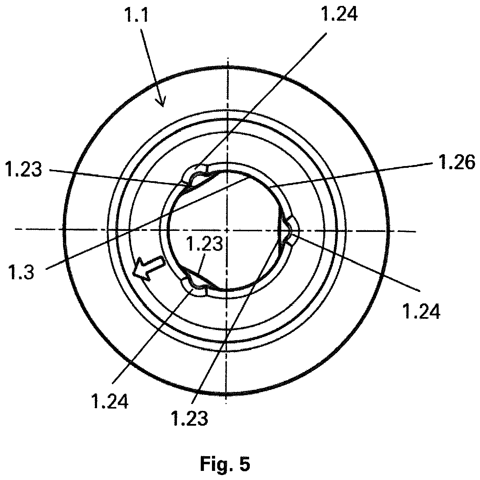

Das Rohrstück 1.2 des Abflusselements 1.1 weist innenseitig Einlaufkanäle 1.24 auf, die sich ausgehend von der Einlauföffnung 5 des Rohrstücks 1.2 im Wesentlichen vertikal in Richtung der Dichtwandung 1.3 erstrecken und oberhalb der von der Dichtwandung 1.3 definierten Dichtfläche 1.25 enden. Die Einlaufkanäle 1.24 sind in die Innenseite des Rohrstückes radial eingeformt und vorzugsweise gleichmäßig über den Innenumfang des Rohrstückes 1.2 verteilt angeordnet. Das Querschnittsprofil der Dichtfläche 1.25 der Dichtwandung 1.3 weist dabei drei kreisbogenförmige Abschnitte 1.26 und drei abgeflachte Flächen, beispielsweise drei geringfügig nach innen gewölbte Abschnitte 1.23 auf (siehe insbesondere Fig. 5). Somit weicht das Querschnittsprofil des Dichtabschnitts 6.7 der Dichtmembran 6 im demontierten Zustand der Dichtmembran von dem Querschnittsprofil der Dichtfläche 1.25 der Dichtwandung 1.3 ab. Hierdurch wird ein definiertes Nachgeben oder Einknicken der Dichtmembran 6 bei anstehender Flüssigkeit smenge erreicht, so dass auch schon eine relativ geringe Flüssigkeitsmenge die Dichtmembran 6 zuverlässig in eine Öffnungsstellung drücken kann.

Die abgeflachten Flächen bzw. die nach innen gewölbten Abschnitte 1.23 schließen sich dabei, in Fließrichtung der Flüssigkeit betrachtet, in vertikaler Richtung an die Einlaufkanäle 1.24 an. Hierdurch staut sich die in die Einlaufkanäle 1.24 fließende Flüssigkeit zunächst auf den Vorsprüngen, die durch die abgeflachten Flächen bzw. die nach innen gewölbten Abschnitte 1.23 gebildet werden. Somit wird die auf die Dichtmembran 6 wirkende Kraft verstärkt, so dass die Dichtmembran 6 in zuverlässiger Weise in eine Öffnungsstellung gedrückt wird. Die nach innen gewölbten Abschnitte 1.23 erstrecken sich beispielsweise über einen Winkel von jeweils ca. 30°, wohingegen sich die kreisbogenförmigen Abschnitte 1.26 über einen Winkel von jeweils ca. 70° erstrecken.

In Fig. 8 ist zu erkennen, dass die Dichtmembran 6 mit dem abgerundeten Übergang des Einlauftrichters 1.4 in Richtung des Rohrstückes 1.2 einen ringförmigen Einlaufkanal 9 begrenzt, der sich in Abflussrichtung gesehen gegen Null verjüngt. Der Einlaufkanal 9 ist dabei durch die Einlaufkanäle 1.24 radial sowie axial erweitert.

Die Ausführung der Erfindung ist nicht auf die in der Zeichnung dargestellten Ausführungsbeispiele beschränkt. Vielmehr sind zahlreiche Varianten denkbar, die auch bei von dem gezeigten Ausführungsbeispiel abweichender Gestaltung von der in den beiliegenden Ansprüchen angegebenen Erfindung Gebrauch machen.

## Patentansprüche

1. Geruchverschlussvorrichtung (1), insbesondere für eine Sanitärvorrichtung, mit einem ein Rohrstück (1.2) aufweisenden Abflusselement (1.1) wobei das Rohrstück (1.2) eine Dichtwandung (1.3) mit einer umlaufenden Dichtfläche (1.25) definiert,
mit einer einen umlaufenden Dichtabschnitt (6.7) aufweisenden Dichtmembran (6) aus gummielastischem Material, welche in einer Verschlussstellung mit ihrem Dichtabschnitt dichtend in Kontakt mit der Dichtfläche (1.25) der Dichtwandung (1.3) ist und durch anstehende Flüssigkeit, insbesondere Urin, von der Dichtwandung (1.3) in eine Öffnungsstellung gedrückt wird, und
mit einer Halterung (8) zur Lagerung der Dichtmembran (6) relativ zu der Dichtwandung (1.3), wobei die umlaufende Dichtfläche (1.25) der Dichtwandung (1.3) und der umlaufende Dichtabschnitt (6.7) der Dichtmembran (6) im demontierten Zustand der Dichtmembran (6) voneinander abweichende Querschnittsprofile aufweisen, **dadurch gekennzeichnet,**
**dass** die umlaufende Dichtfläche (1.25) der Dichtwandung (1.3) ein von einem kreisrunden Querschnittsprofil abweichendes Querschnittsprofil aufweist.

2. Geruchverschlussvorrichtung nach Anspruch 1,
**dadurch gekennzeichnet, dass** der umlaufende Dichtabschnitt (6.7) der Dichtmembran (6) im demontierten Zustand der Dichtmembran (6) ein kreisrundes oder im Wesentlichen kreisrundes Querschnittsprofil aufweist.

3. Geruchverschlussvorrichtung nach Anspruch 1 oder 2,
**dadurch gekennzeichnet, dass** die umlaufende Dichtfläche (1.25) der Dichtwandung (1.3) ein ovales oder ellipsenförmiges Querschnittsprofil aufweist.

4. Geruchverschlussvorrichtung nach Anspruch 1 oder 2,
**dadurch gekennzeichnet, dass** die umlaufende Dichtfläche (1.25) der Dichtwandung (1.3) ein Querschnittsprofil aufweist, welches aus mindestens einem bogenförmigen, vorzugsweise kreisbogenförmigen Abschnitt (1.26) und mindestens einem geraden oder nach innen gewölbten Abschnitt (1.23) zusammengesetzt ist.

5. Geruchverschlussvorrichtung nach einem der Ansprüche 1 bis 4,
**dadurch gekennzeichnet, dass** das Rohrstück (1.2) innenseitig Einlaufkanäle (1.24) aufweist, wobei sich die Einlaufkanäle (1.24) im Wesentlichen vertikal in Richtung der Dichtwandung (1.3) erstrecken und oberhalb der Dichtfläche (1.25) der Dichtwandung (1.3) enden.

6. Geruchverschlussvorrichtung nach einem der Ansprüche 1 bis 5,
**dadurch gekennzeichnet, dass** die Dichtmembran (6) einen gummielastischen, sich nach oben verjüngenden Stauabschnitt (6.1) und einen sich daran in Abflussrichtung gesehen anschließenden, gummielastischen, im Wesentlichen hohlzylindrischen Abschnitt (6.2) aufweist, wobei die Außenseite des Stauabschnitts (6.1) mit dem Rohrstück (1.2) einen ringförmigen, ununterbrochenen Einlaufkanal (9) begrenzt, der sich in Abflussrichtung gesehen gegen Null verjüngt.

7. Geruchverschlussvorrichtung nach Anspruch 6,
**dadurch gekennzeichnet, dass** der Dichtabschnitt der Dichtmembran (6) durch einen Teil des im Wesentlichen hohlzylindrischen Abschnitts (6.2) definiert ist.

8. Geruchverschlussvorrichtung nach einem der Ansprüche 1 bis 7,
**dadurch gekennzeichnet, dass** die Dichtmembran (6) an einem Vorsprung (8.2) der Halterung (8) fixiert ist, wobei der Vorsprung (8.2) an der Oberseite oder Spitze der Halterung (8) angeordnet ist und eine Ringnut oder Hinterschneidung aufweist, an welcher die Dichtmembran (8) dichtend angeknöpft ist.

9. Geruchverschlussvorrichtung nach einem der Ansprüche 1 bis 8,
**dadurch gekennzeichnet, dass** die Halterung (8) einen gewölbten, einen kugelsegmentförmigen oder einen im Wesentlichen planen Abschnitt (8.1) aufweist, auf dem die Dichtmembran (6) aufliegt.

10. Geruchverschlussvorrichtung nach einem der Ansprüche 1 bis 9,
**dadurch gekennzeichnet, dass** die Halterung (8) Stützbeine (8.3) aufweist, die beanstandet zu der Innenfläche (6.5) der Dichtmembran (6) angeordnet sind, gegenüber einem unteren Rand (6.6) der Dichtmembran (6) nach unten vorstehen, wobei die Stützbeine (8.3) durch Querstreben (8.4) miteinander verbunden sind und wobei die Querstreben (8.4) unterhalb des unteren Randes (6.6) der Dichtmembran (6) angeordnet sind.

11. Geruchverschlussvorrichtung nach Anspruch 10,
**dadurch gekennzeichnet, dass** die Stützbeine (8.3) einen nach außen abgewinkelten oder schräg nach außen verlaufenden Beinabschnitt (8.31) aufweisen.

12. Geruchverschlussvorrichtung nach einem der Ansprüche 1 bis 11,
**dadurch gekennzeichnet, dass** das Rohrstück (1.2) Ausnehmungen (1.21) aufweist, in welche die Halterung (8) eingreift.

13. Geruchverschlussvorrichtung nach einem der Ansprüche 1 bis 12,
**dadurch gekennzeichnet, dass** oberhalb des Abflusselements (1.1) eine hauben- oder kappenförmige Abdeckung (11) angeordnet ist, die über Abstandhalter (11.1) lösbar mit dem Abflusselement (1.1) verbunden ist, wobei die Abdeckung (11) entlang ihres gesamten Außenumfangs das Abflusselement (1.1) seitlich überragt.

14. Geruchverschlussvorrichtung nach einem der Ansprüche 1 bis 13,
**dadurch gekennzeichnet, dass** das Rohrstück (1.2) in eine Rohrstückverlängerung (10) eingesteckt ist, wobei die Rohrstückverlängerung (10) lösbar mit dem Rohrstück (1.2) und/oder dem Abflusselement (1.1) verbunden ist und wobei die Rohrstückverlängerung (10) innenseitig einen Absatz (10.1) aufweist, auf dem die Halterung (8) abgestützt ist.

15. Geruchverschlussvorrichtung nach Anspruch 14,
**dadurch gekennzeichnet, dass** die Rohrstückverlängerung (10) und das Abflusselement (1.1) einander zugeordnete Rastelemente (10.31) aufweisen, wobei die Rastelemente (10.31) durch eine Drehbewegung des Abflusselements (1.1) relativ zu der Rohrstückverlängerung (10) miteinander verrastbar sind.

## Claims

1. Odour closure device (1), in particular for a sanitary device,
with a drain element (1.1) having a pipe section (1.2), the pipe section (1.2) defining a sealing wall (1.3) with a circumferential sealing surface (1.25), with a sealing membrane (6) of rubber-elastic material having a circumferential sealing section (6.7), which in a closed position is in sealing contact with its sealing section with the sealing surface (1.25) of the sealing wall (1.3) and is pressed by liquid present, in particular urine, from the sealing wall (1.3) into an open position, and
with a holder (8) for mounting the sealing membrane (6) relative to the sealing wall (1.3), wherein the circumferential sealing surface (1.25) of the sealing wall (1.3) and the circumferential sealing section (6.7) of the sealing membrane (6) have cross-sectional profiles which differ from one another in the disassembled state of the sealing membrane (6), **characterized in that in that** the circumferential sealing surface (1.25) of the sealing wall (1.3) has a cross-sectional profile which differs from a circular cross-sectional profile.

2. Odour closure device according to claim 1,
**characterized in that** the circumferential sealing section (6.7) of the sealing membrane (6) has a circular or substantially circular cross-sectional profile in the dismantled state of the sealing membrane (6).

3. Odour closure device according to claim 1 or 2,
**characterized in that** the peripheral sealing surface (1.25) of the sealing wall (1.3) has an oval or elliptical cross-sectional profile.

4. Odour closure device according to claim 1 or 2,
**characterized in that** the circumferential sealing surface (1.25) of the sealing wall (1.3) has a cross-sectional profile which is composed of at least one arcuate, preferably circular arc-shaped section (1.26) and at least one straight or inwardly curved section (1.23).

5. Odour closure device according to one of claims 1 to 4,
**characterized in that** the pipe section (1.2) has inlet channels (1.24) on the inside, the inlet channels (1.24) extending substantially vertically in the direction of the sealing wall (1.3) and ending above the sealing surface (1.25) of the sealing wall (1.3).

6. Odour closure device according to one of claims 1 to 5,
**characterized in that** the sealing membrane (6) has a rubber-elastic, upwardly tapering damming section (6.1) and a rubber-elastic, substantially hollow-cylindrical section (6.2) adjoining the latter, viewed in the outflow direction, the outside of the damming section (6.1) delimiting with the pipe section (1.2) an annular, uninterrupted inlet channel (9) which tapers towards zero, viewed in the outflow direction.

7. Odour closure device according to claim 6,
**characterized in that** the sealing section of the sealing membrane (6) is defined by a part of the substantially hollow cylindrical section (6.2).

8. Odour closure device according to any one of claims 1 to 7,
**characterized in that** the sealing membrane (6) is fixed to a projection (8.2) of the holder (8), the projection (8.2) being arranged on the upper side or tip of the holder (8) and having an annular groove or undercut to which the sealing membrane (6) is sealingly buttoned.

9. Odour closure device according to any of claims 1 to 8,
**characterized in that** the holder (8) has a curved, a spherical segmental or a substantially flat section (8.1) on which the sealing membrane (6) rests.

10. Odour closure device according to any one of claims 1 to 9,
**characterized in that** the holder (8) has support legs (8.3) which are arranged at a distance from the inner surface (6.5) of the sealing membrane (6), project downwards relative to a lower edge (6.6) of the sealing membrane (6), the support legs (8.3) being connected to one another by transverse struts (8.4) and the transverse struts (8.4) being arranged below the lower edge (6.6) of the sealing membrane (6).

11. Odour closure device according to claim 10,
**characterized in that** the support legs (8.3) have a leg portion (8.31) which is angled outwards or extends obliquely outwards.

12. Odour closure device according to any one of claims 1 to 11,
**characterized in that** the pipe section (1.2) has recesses (1.21) in which the holder (8) engages.

13. Odour closure device according to one of claims 1 to 12,
**characterized in that** a hood- or cap-shaped cover (11) is arranged above the drain element (1.1), which cover is detachably connected to the drain element (1.1) via spacers (11.1), the cover (11) projecting laterally beyond the drain element (1.1) along its entire outer circumference.

14. Odour closure device according to one of claims 1 to 13,
**characterized in that** the pipe section (1.2) is inserted into a pipe section extension (10), wherein the pipe section extension (10) is detachably connected to the pipe section (1.2) and/or the drain element (1.1) and wherein the pipe section extension (10) has a shoulder (10.1) on the inside on which the holder (8) is supported.

15. Odour closure device according to claim 14,
**characterized in that** the pipe section extension (10) and the drain element (1.1) have locking elements (10.31) associated with one another, wherein the locking elements (10.31) can be locked together by a rotational movement of the drain element (1.1) relative to the pipe section extension (10).

## Revendications

1. Dispositif anti-odeurs (1), en particulier pour un dispositif sanitaire, avec un élément de vidange (1.1) présentant une pièce tubulaire (1.2), sachant que la pièce tubulaire (1.2) définit une paroi d'étanchéité (1.3) avec une surface d'étanchéité (1.25) périphérique,
avec une membrane d'étanchéité (6) en matière présentant l'élasticité du caoutchouc, qui est dotée d'une section d'étanchéité (6.7) périphérique, laquelle, dans une position de fermeture, est en contact étanche avec la surface d'étanchéité (1.25) de la paroi d'étanchéité (1.3) et est pressée dans une position d'ouverture, à distance de la paroi d'étanchéité (1.3), par le liquide, qui, en particulier, est de l'urine, et
avec un support (8) pour le montage de la membrane d'étanchéité (6) par rapport à la paroi d'étanchéité (1.3), sachant que, quand la membrane d'étanchéité (6) est démontée, la surface d'étanchéité (1.25) périphérique de la paroi d'étanchéité (1.3) et la section d'étanchéité (6.7) périphérique de la membrane d'étanchéité (6) présentent des profils de coupe transversale différant l'un de l'autre, **caractérisé en ce que**
la surface d'étanchéité (1.25) périphérique de la paroi d'étanchéité (1.3) est dotée d'un profil de coupe transversale qui diffère d'un profil de coupe transversale circulaire.

2. Dispositif anti-odeurs selon la revendication 1, **caractérisé en ce que**, lorsque la membrane d'étanchéité (6) est démontée, la section d'étanchéité périphérique (6.7) de la membrane d'étanchéité (6) présente un profil de coupe transversale circulaire ou sensiblement circulaire.

3. Dispositif anti-odeurs selon la revendication 1, **caractérisé en ce que** la surface d'étanchéité (1.25) de la paroi d'étanchéité (1.3) est dotée d'un profil de coupe transversale ovale ou elliptique.

4. Dispositif anti-odeurs selon la revendication 1 ou 2, **caractérisé en ce que** la surface d'étanchéité (1.25) périphérique de la paroi d'étanchéité (1.3) est dotée d'un profil de coupe transversale qui est composé d'au moins une partie en forme d'arc, de préférence en forme d'arc de cercle, (1.26), et d'au moins une partie droite ou concave (1.23).

5. Dispositif anti-odeurs selon l'une des revendications 1 à4, **caractérisé en ce que** la pièce tubulaire (1.2) est dotée, à l'intérieur, de canaux d'entrée (1.24), sachant que les canaux d'entrée (1.24) s'étendent essentiellement verticalement en direction de la paroi d'étanchéité (1.3) et se terminent au-dessus de la surface d'étanchéité (1.25) de la paroi d'étanchéité (1.3).

6. Dispositif anti-odeurs selon l'une des revendications 1 à 5, **caractérisé en ce que** la membrane d'étanchéité (6) comporte une section de retenue (6.1), qui, présentant l'élasticité du caoutchouc, s'amincit vers le haut, et une section (6.2) sensiblement cylindrique, creuse, présentant l'élasticité du caoutchouc, y faisant suite, vue dans la direction de vidange, sachant que le côté extérieur de la section de retenue (6.1) limite, avec la pièce tubulaire (1.2), un canal d'entrée (9) annulaire continu, qui s'amincit vers zéro, vu dans la direction de vidange.

7. Dispositif anti-odeurs selon la revendication 6, **caractérisé en ce que** la section d'étanchéité de la membrane d'étanchéité (6) est définie par une partie de la section essentiellement cylindrique, creuse (6.2).

8. Dispositif anti-odeurs selon l'une des revendications 1 à 7, **caractérisé en ce que** la membrane d'étanchéité (6) est fixée à une saillie (8.2) du support (8), sachant que la saillie (8.2) est disposée sur la face supérieure ou la pointe du support (8) et est dotée d'une rainure annulaire ou contre-dépouille à laquelle la membrane d'étanchéité (6) est raccordée de manière étanche.

9. Dispositif anti-odeurs selon la revendication 1 à 8, **caractérisé en ce que** le support (8) est doté d'une section voûtée, en forme de segment sphérique ou sensiblement plane (8.1) sur laquelle repose la membrane d'étanchéité (6).

10. Dispositif anti-odeurs selon l'une des revendications 1 à 9,**caractérisé en ce que** le support (8) est doté de pieds d'appui (8.3) qui sont disposés à distance de la surface intérieure (6.5) de la membrane d'étanchéité (6), à l'opposé d'un bord inférieur (6.6) de la membrane d'étanchéité (6), en saillie vers le bas, sachant que les pieds d'appui (8.3) sont reliés ensemble par des traverses (8.4) et sachant que les traverses (8.4) sont disposées au-dessous du bord inférieur (6.6) de la membrane d'étanchéité (6).

11. Dispositif anti-odeurs selon la revendication 10, **caractérisé en ce que** les pieds d'appui (8.3) sont dotés d'une section de pied (8.31) coudée vers l'extérieur ou s'étendant obliquement vers l'extérieur.

12. Dispositif anti-odeurs selon l'une des revendications 1 à 11, **caractérisé en ce que** la pièce tubulaire (1.2) est dotée d'évidements (1.21) dans lesquels le support (8) s'engage.

13. Dispositif anti-odeurs selon l'une des revendications 1 à 12, **caractérisé en ce que**, au-dessus de l'élément de vidange (1,1), est disposé un couvercle en forme de capuchon (11), qui est relié de manière amovible à l'élément de vidange (1,1) par des écarteurs, sachant que le couvercle (11) est latéralement en saillie de l'élément de vidange (1,1) sur tout son pourtour.

14. Dispositif anti-odeurs selon l'une des revendications 1 à 13, **caractérisé en ce que** la pièce tubulaire (1.2) est insérée dans un prolongement de pièce tubulaire (10), sachant que le prolongement de pièce tubulaire (10) est relié de manière amovible à la pièce tubulaire (1.2) et/ou à l'élément de vidange (1,1) et sachant que le prolongement de pièce tubulaire (10) est doté à l'intérieur d'une marche (10.1) sur laquelle le support (8) prend appui.

15. Dispositif anti-odeurs selon la revendication 14, **caractérisé en ce que** le prolongement de la pièce tubulaire (10) et l'élément de vidange (1.1) sont dotés d'éléments d'encliquetage (10.31) associés, sachant que les éléments d'encliquetage (10.31) peuvent être encliquetés l'un dans l'autre par un mouvement de pivotement de l'élément de vidange (1.1) par rapport au prolongement de la pièce tubulaire (10).
